# EUROPÄISCHE PATENTSCHRIFT

(11) **EP 2 904 658 B1**
(45) Veröffentlichungstag und Bekanntmachung des Hinweises auf die Patenterteilung: **11.01.2017**
(21) Anmeldenummer: 13794795.8
(22) Anmeldetag: 30.09.2013
(51) Int. Cl.: H01M 10/04, H01M 10/0583

(54) **VORRICHTUNG ZUR HERSTELLUNG VON ELEKTRODENSTAPELN**
DEVICE FOR PRODUCING ELECTRODE STACKS
DISPOSITIF DE PRODUCTION D'EMPILEMENTS D'ÉLECTRODES

(30) Priorität: 04.10.2012 DE 102012019975
(43) Veröffentlichungstag der Anmeldung: 12.08.2015
(73) Patentinhaber: Jonas & Redmann Automationstechnik GmbH, 10553 Berlin (DE)
(72) Erfinder: REDMANN, Lutz, 14532 Kleinmachnow (DE)
(74) Vertreter: Schulz Junghans Patentanwälte PartGmbB
(86) Internationale Anmeldenummer: PCT/DE2013/000557
(87) Internationale Veröffentlichungsnummer: WO 2014/053112

(56) Entgegenhaltungen:
- EP-A2- 0 397 640
- DE-A1-102009 037 727
- DE-A1-102010 055 608
- DE-A1-102010 055 611

## Beschreibung

Die vorliegende Erfindung betrifft eine Vorrichtung und ein Verfahren zur Herstellung von Elektrodenstapeln, insbesondere für den Einsatz in Batterien.

### Stand der Technik

Für Automatisierungsfirmen birgt der Herstellungsprozeß von Energiespeichern, wie Batteriezellen, große Herausforderungen. Die hauchdünnen Elektroden und Separatoren müssen zugeschnitten, in Sekundenbruchteilen µm-genau gestapelt und mit Leitern verschweißt werden. Diese dünnen Anoden-, Kathoden- und Separatorlagen sind kaum 0,15 mm dick, flexibel, teils porös und obendrein unterschiedlich groß.

Das stellt höchste Anforderungen an die Automatisierer und eine extreme Präzision ist gefordert, um die gewünschte Zyklenfestigkeit, Lebensdauer und Wirkungsgrade der Anwender dauerhaft zu erfüllen.

Bei der Montage der Batterien werden Elektroden, Anode und Kathode, abwechselnd mit Separatoren als Zwischenlage übereinander gestapelt. Neben der Möglichkeit, die Anoden- und Kathodenfolien zu Elektrodenplatten zu schneiden und mit dem dazwischen angeordneten Separator blätterförmig aufeinander zu Stacks zu stapeln, gibt es Verfahren, die den flächigen Separator von einer Material- Rolle abwickeln und durch Biegevorgänge z.B. Zickzack - förmig legen. Zwischen die einzelnen Lagen wird die Anode oder Kathode in die entstandenen taschenförmigen Zwischenräume eingeschoben.

Die DE 10 2010 055 608 A1 beschreibt ein Verfahren zum Herstellen eines Elektrodenstapels, bei dem eine Schicht des Elektrodenstapels als Endlosmaterial vorliegt und alternierend gefaltet wird und die beiden anderen Schichten in die durch die Faltung entstehenden Taschen eingelegt werden. Die Faltung entsteht dabei durch die Anordnung von Begrenzungsstäben, zwischen denen das Material eingebracht wird. Die Stäbe werden dann seitlich herausgezogen.

In der DE10 2009 037 727 A1 wird ein Verfahren zum Herstellen eines Elektrodenstapels, bestehend aus Anode, Katode und Separator beschrieben, bei dem die relative Positionierung einer zweiten Lage des Elektrodenstapels zu einer ersten Lage verbessert werden soll und damit eine vollflächige Überdeckung der Elektrodenplatten erreicht werden soll. Das Verfahren beinhaltet eine Einrichtung zum Zuführen der Separatorlage von der Separatorvorratsrolle. Dabei wird das Separatormaterial in vorbestimmter Länge abgewickelt und zur Aufnahme der Elektroden umgefaltet. Während des Umlenkens wird eine Zugkraft auf die Separatorbahn ausgeübt, während dessen die Elektrodenplatte durch eine Halteeinrichtung fixiert wird.

Bei der Herstellungsweise nach dem Stand der Technik tritt das Problem auf, dass beim Abwickelvorgang und beim Formen der Taschen das Separatormaterial durch ein verfahrensbedingtes Verkanten oder durch zu hohe Zugbeanspruchung abreisst und damit der gesamte aktuelle Stapel nicht verwendbar ist. Der vollautomatisierte Produktionsprozeß ist gestört und Taktzeiten können nicht eingehalten werden. Damit ist die Leistungsfähigkeit der Maschine begrenzt. Durch die Unterbrechung des Produktionsprozesses und damit Erhöhung der Taktzeiten, entsteht ein wirtschaftlicher Nachteil.

EP0397640 beschreibt eine Vorrichtung zum Eintaschen von Platten für Akkumulatoren, welche eine Faltstation aufweist, mit welcher bereits geschnittene Separatorteile durch ein Ablenkblech oder einen Gasstrom aus einer Düse nach oben umgelenkt und schließlich um die Fußkante der Platte nach hinten gefaltet werden. Offenbarung der Erfindung Gegenstand der vorliegenden Erfindung ist eine Vorrichtung und ein Verfahren zur Herstellung eines Elektrodenstapels, bestehend aus einzelnen Schichten, z.B. positiven und negativen Elektroden mit dazwischenliegender Separatorfolie, die in mehrfach aufeinander folgenden Lagen angeordnet sind.

Der Erfindung liegt die Aufgabe zugrunde, eine Vorrichtung sowie ein Verfahren anzugeben, mit denen beim Herstellen eines Elektrodenstapels die Faltung der Separatorfolie abwechselnd auf beiden Seiten des Elektrodenstapels mit einer hohen Faltqualität ohne mechanische Beschädigung des Materials erfolgt und ein schnelleres Stapeln durch eine bessere Verteilung der auftretenden Zug-/Druckspannungen möglich wird.

Dazu fixieren bei der Vorrichtung erfindungsgemäße Niederhalter, die möglichst nahe an der zu formenden Faltung platziert sind, das zu faltende Material für den Separator über seine gesamte Breite und die Taschenbildung erfolgt durch einen Gasstrom aus einem erfindungsgemäßen Überdruckmodul über die gesamte Breite der Separatorfolie, wodurch eine beschädigungsfreie und schonende Zickzack-Faltung realisiert wird.

Die Erfindung ist nicht beschränkt auf die Verwendung bei der Herstellung von Elektrodenstapeln für einen Batterie-/Akkumulatortyp, sondern läßt sich überall dort einsetzen, wo flache, biegsame Folien für die Weiterverarbeitungsprozesse bearbeitet werden müssen. Besonders vorteilhaft ist die Erfindung bei der Verwendung sehr dünner und hochempfindlicher Separatorfolie anwendbar.

Mit der erfindungsgemäßen Vorrichtung ist es möglich, schnellere Taktzeiten zu erreichen, also die Maschine mit größerer Geschwindigkeit zu fahren, womit die Produktivität erhöht wird und eine kostengünstige Fertigung erfolgen kann.

Erfindungsgemäß wird diese Aufgabe durch die Merkmale im kennzeichnenden Teil des Anspruches 1 gelöst. Weitere vorteilhafte Ausgestaltungen der Erfindung ergeben sich aus den hiervon abhängigen Unteransprüchen und in der Beschreibung.

Die Aufgabe wird durch eine Vorrichtung, umfassend
- einen Stapeltisch zum Ablegen und Stapeln der Elektrodenschichten,
- mindestens einen Greifer zur Aufnahme der abzulegenden Zellelemente, insbesondere der Elektroden,
- eine Zuführvorrichtung mit einer Vorratsrolle (Endlosmaterial enthaltend),
- eine Führungseinrichtung für die Folienfaltung,
- sowie auf jeder Seite des Elektrodenstapels einen Niederhalter gelöst.

Der mindestens eine Greifer enthält erfindungsgemäß mindestens auf einer Seite ein Überdruckmodul mit einer Gas-Ausströmdüse, mit der beim Ablegen der Elektroden der Faltungsvorgang des zwischen die Zellelemente zickzack-förmig zu legenden Endlosmaterials vorteilhaft beeinflußt wird.

Für die erfindungsgemäße Vorrichtung ist über einem Ablagetisch an jeder Seite je ein Niederhalter vorgesehen, der die Aufgabe hat, den schon abgelegten Stapel mit Elektroden und der dazwischen angeordneten Separatorfolie zu fixieren. Die Niederhalter können für den Stapelvorgang parallel zum Ablagetisch in x-und z- Richtung bewegt werden. Nachdem die Elektroden mittels des Greifers für die Stapelung angesaugt und zum Stapeltisch verfahren werden, wird beim Ablegen durch den Gasstrom, der aus einer Ausströmdüse des erfindungsgemäßen Überdruckmoduls am Greifer austritt, an der seitlich befindlichen Separatorfolie die nächste Folientasche ausgeformt, wodurch in Verbindung mit den Niederhaltern und deren Zustellbewegung eine sanfte beschädigungsfreie Faltung der Separatorfolie erreicht wird.

Der Faltungsvorgang und das Aufsetzen des Niederhalters kann durch einen Gasstrom aus Düsen an der Innenseite der Niederhalter noch schonender gestaltet werden. Das an den Greifern bzw. Niederhaltern verwendete Gas kann z.B. vorteilhafter Weise gereinigte ionisierte Luft sein.

Weiterhin kann auch durch Rollen an den Innenseiten der Niederhalter der Faltungs- und Aufsetzvorgang schonend gestaltet werden.

Weiterhin wird die Aufgabe durch ein Verfahren zur Herstellung von Elektrodenstapeln mit positiven und negativen Elektroden und dazwischen liegender, mittels Zickzack-Faltung anzuordnender Separatorfolie gelöst, bei dem mit mindestens einer Führungseinrichtung Separatorfolie von einer Endlosrolle zugeführt wird, mit mindestens einem Greifer Elektroden aufgenommen und abgelegt werden, mittels eines am Greifer angeordneten Überdruckmoduls ein gerichteter Gasstrom derart erzeugt wird, dass der aus dem Überdruckmodul austretende Gasstrom durch Umlenkung der Separatorfolie eine Folientasche formt, und mittels eines Niederhalters, der seitlich an einem zur Aufnahme des Elektrodenstapels vorgesehenen Stapeltisch angeordnet ist, die gebildete Folientasche fixiert wird.

Vorzugsweise wird dabei die Führungseinrichtung alternierend verfahren.

Die Faltung der Separatorfolie kann mittels Umlenkrollen, mit denen die Niederhalter an der der Separatorfolie zugewandten Innenseite versehen sind, und/ oder mittels der Wirkung eines Gasstroms aus jeweils einer Ausstromdüse, die an den Niederhaltern jeweils an der der Separatorfolie zugewandten Innenseite vorgesehen ist, unterstützt werden.

An Hand der Figuren 1 bis 8 wird der Gegenstand der Erfindung nachfolgend näher erläutert, ohne dass die Erfindung auf die dort beispielhaft abgebildeten Ausführungsarten beschränkt sein soll.

Es zeigen:
Figur 1 Prinzipdarstellung der erfindungsgemäßen Vorrichtung in der Situation der Ablage der ersten Elektrode 2
Figur 2 die Vorrichtung nach der Ablage der ersten Elektrode beim Umlegen der Separatorfolie 1 (bei fixierter erster Elektrode 2)
Figur 3 Prinzipdarstellung der erfindungsgemäßen Vorrichtung in der Situation der Ablage der zweiten Elektrode 3
Figur 4 die Vorrichtung nach der Ablage der zweiten Elektrode 3 beim Umlegen der Separatorfolie 1 auf die andere Seite (bei fixierter erster und zweiter Elektrode 2, 3)
Figur 5 Prinzipdarstellung der erfindungsgemäßen Vorrichtung in der Situation der Ablage der dritten Elektrode 2
Figur 6 Ausgestaltung der erfindungsgemäßen Vorrichtung mit Unterstützung der Umlage und Faltung der Separatorfolie 1 von außen durch ein Unterdruckmodul 9 an den Niederhaltern 4,5
Figur 7 Vorrichtung mit Unterstützung der Umlage und Faltung der Separatorfolie 1 durch einen Gasstrom 21 aus Ausströmdüsen 20 an den Niederhaltern
Figur 8 Vorrichtung mit Unterstützung der Umlage und Faltung der Separatorfolie 1 durch Umlenkrollen 19 an den Niederhaltern 4,5

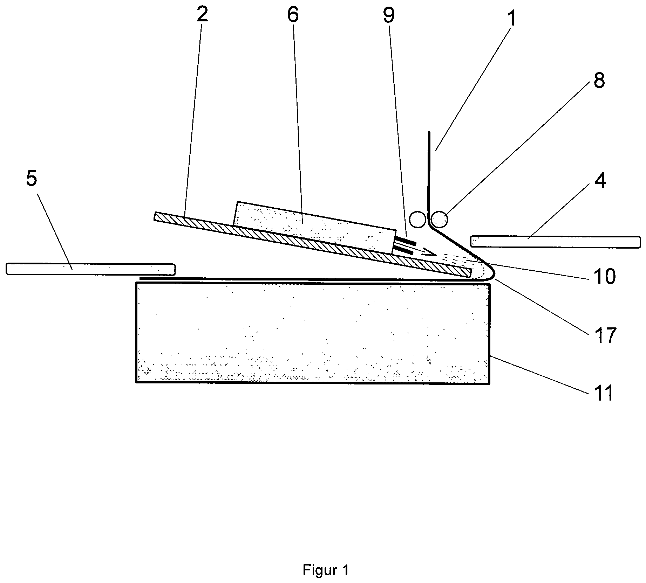

Nach Figur 1 fixiert zuerst ein erfindungsgemäßer Niederhalter 5 den Anfang der Separatorfolie 1 auf dem Stapeltisch 11 während ein Greifer 6 eine Elektrode 2, entnommen einem nicht näher dargestellten Vorratsstapel von Elektroden, auf der Separatorfolie 1 auf dem Stapeltisch 11 platziert. Der Greifer 6 für das Handling der Elektroden kann z.B. ein üblicher Sauggreifer sein.

Am Greifer 6 ist seitlich in Richtung der zugeführten Separatorfolie 1 erfindungsgemäß ein Überdruckmodul 9 angeordnet. Mit Hilfe eines Gasstroms 10 aus dem am Greifer 6 angeordneten Überdruckmodul 9 wird eine Folientasche 17 dort ausgeformt, wo die Faltung der Separatorfolie 1 erreicht werden soll. Die Zuführung der Separatorfolie 1 von einer nicht näher dargestellten Vorratsrolle zur Führungseinrichtung 8 wird auf übliche Weise realisiert. Die dazu erforderliche Antriebstechnik mit Antriebs-, Spannwalzen, Leerlauf-, Umkehrwalzen ist die technisch übliche und wird nicht besonders beschrieben.

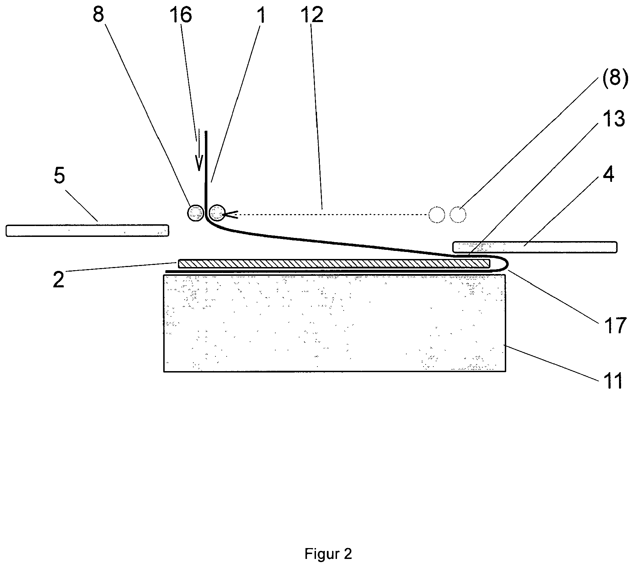

Die Figur 2 zeigt die Vorrichtung nach der Ablage der ersten Elektrode 2 beim Umlegen der Separatorfolie 1 (bei fixierter erster Elektrode 2).

Nachdem der Niederhalter 4 die gefaltete Separatorfolie 1 auf der Elektrode 2 fixiert hat, wird mit Hilfe der auf die linke Seite bewegten Führungseinrichtung 8 die Elektrode 2 mit der Separatorfolie 1 abgedeckt. Der Niederhalter 5 gibt den Bereich zur Bildung einer neuen Folientasche 17 frei.

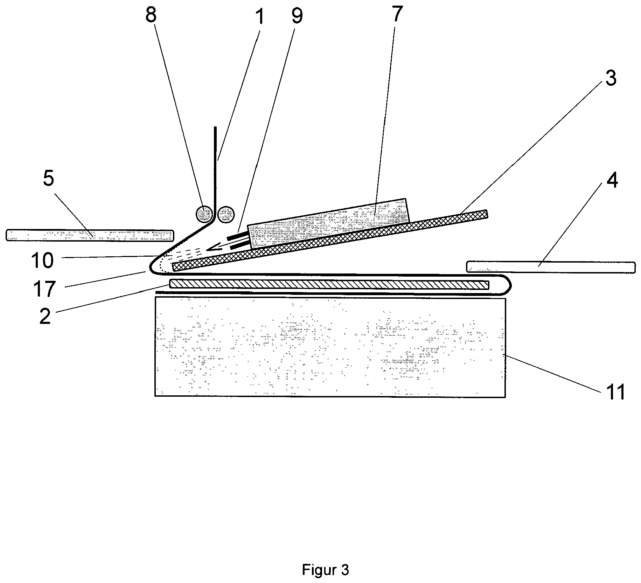

Wie in Figur 3 dargestellt, wird spiegelbildlich zu Figur 1 durch einen Greifer 7 eine weitere Elektrode 3 auf dem Stapel abgelegt und dabei eine neue Folientasche 17 zum Umlegen der Separatorfolie 1 gebildet.

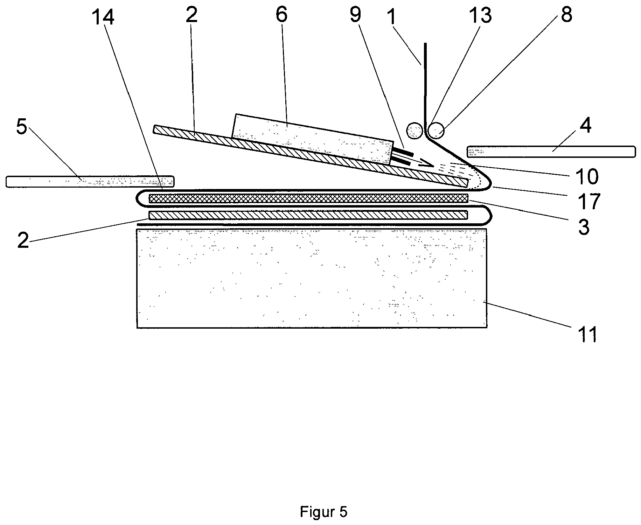

Vorteilhafter Weise ist beim Positionieren und Ablegen der Elektrode 2,3 der Greifer 6,7 mit gehaltener Elektrode 2,3 in Richtung der Folientasche 17 leicht seitlich geneigt, um eine bessere Positionierung im Bereich der sich bildenden Folientasche 17 zu erreichen und eine Kollision der Elektrode 2,3 mit dem entgegengesetzt liegenden Niederhalter 4,5 zu vermeiden (dargestellt in Figur 1 und 5).

Weiterhin ist in der erfindungsgemäßen Vorrichtung die Breite der Greifer 6,7 so gestaltet, dass in Richtung Folientasche 17 und entgegengesetzt dazu ein Überhang 18 der Elektrode 2,3 entsteht, also die Elektrode 2,3 über die Greifer 6,7 hinausragt. Die Größe der gebildeten Folientasche 17 ist abhängig von der freien Separatorlänge zwischen den Fixpunkten 13 an der Führungseinrichtung 8 und 14 an den Niederhaltern 4,5.

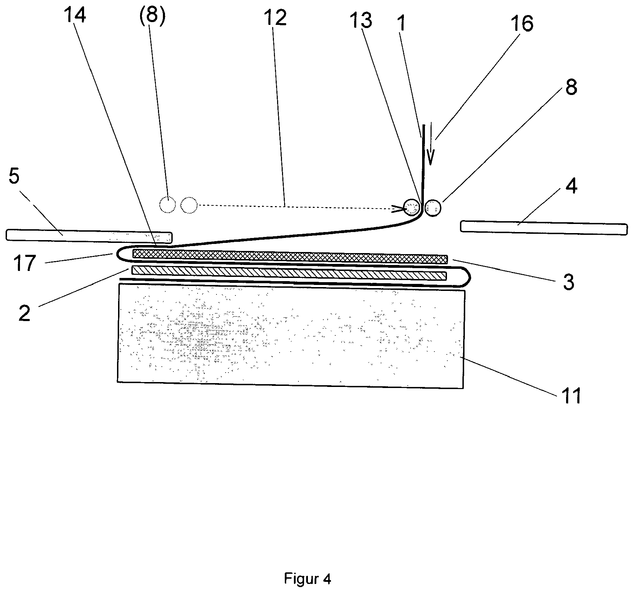

Wie in Figur 4 dargestellt, fixiert nach der Ablage der Elektrode 3 auf dem Elektrodenstapel der über der gebildeten Folientasche 17 befindliche Niederhalter 5 den Elektrodenstapel, einschließlich der neu abgelegten Elektrode 3 und der zuletzt gebildeten Folientasche 17 der Separatorfolie 1 . Der gegenüberliegende Niederhalter 4 wird in eine Ruheposition außerhalb des Stapeltisches 11 verfahren. Für die nächste abzulegende Elektrode wird nach dem Entfernen des Greifers 6,7 aus dem Ablagebereich über dem Elektrodenstapel die Separatorfolie 1 mittels der Führungseinrichtung 8 auf die andere Seite des Stapeltisches 11 über dem Elektrodenstapel geführt.

Figur 5 zeigt die Platzierung der nächsten Elektrode 2, wobei wieder mit Hilfe des Gasstromes 10 aus dem am Greifer 6 befindlichen Überdruckmoduls 9 die nächste Folientasche 17 der Separatorfolie 1 ausgeformt wird.

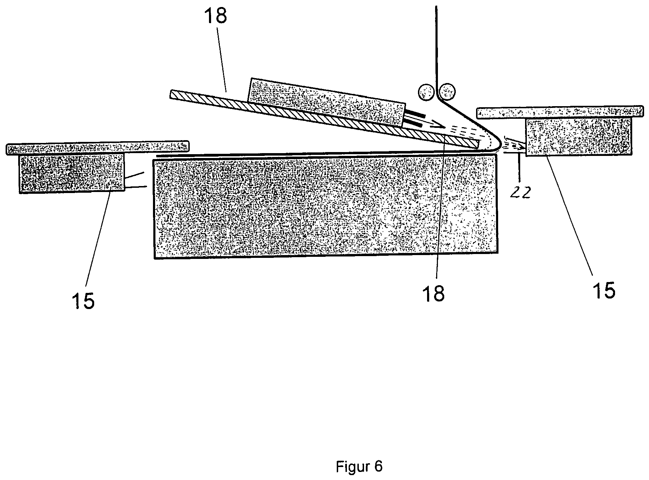

In einer weiteren Ausführungsform der Erfindung, gezeigt in Figur 6, ist es vorgesehen, unterhalb der Niederhalter 4,5 ein Unterdruckmodul 15 anzuordnen. Das Unterdruckmodul 15 dient vorteilhafterweise zur weiteren Ausformung der Folientasche 17, wobei in Richtung der zu bildenden Folientasche 17 am Unterdruckmodul 15 eine Ansaugdüse 22 angeordnet ist.

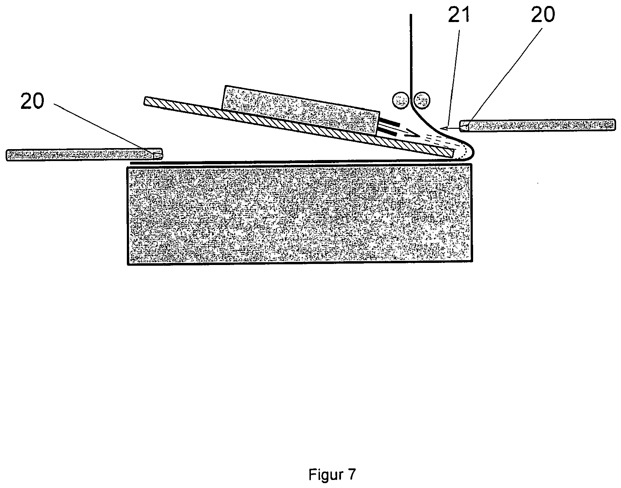

Figur 7 zeigt eine Ausführungsform der Erfindung, in der die Folienfaltung durch einen Gasstrom 21 aus einer Ausströmdüse 20 an den Niederhaltern 4,5 unterstützt wird.

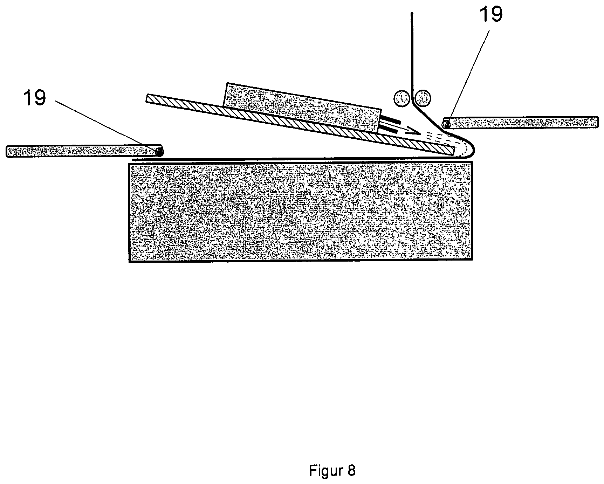

In Figur 8 ist eine Ausführungsform der Erfindung dargestellt, in der die Niederhalter 4,5 mit Umlenkrollen 19 zum schonenden Absetzen auf dem Elektrodenstapel ausgestattet sind.

### Bezugszeichenliste:

- 1: Separatorfolie
- 2: Elektrode
- 3: Elektrode
- 4: rechter Niederhalter
- 5: linker Niederhalter
- 6: Greifer, Überdruckmodul rechts
- 7: Greifer, Überdruckmodul links
- 8: Führungseinrichtung
- 9: Überdruckmodul mit Ausströmdüse
- 10: Gasstrom
- 11: Stapeltisch
- 12: Bewegungsrichtung der Führungseinrichtung
- 13: Fixierungspunkte der Folienführung
- 14: Fixierungspunkte der Niederhalter
- 15: Unterdruckmodul
- 16: Zuführung Separatorfolie
- 17: Folientasche
- 18: Überhang der Elektroden
- 19: Umlenkrolle am Niederhalter
- 20: Ausströmdüse am Niederhalter
- 21: Gasstrom aus dem Niederhalter
- 22: Ansaugdüse

## Patentansprüche

1. Vorrichtung zur Herstellung von Elektrodenstapeln, mit positiven und negativen Elektroden (2,3) und dazwischen liegender, mittels Zickzack-Faltung anzuordnender Separatorfolie (1), mit mindestens einer Führungseinrichtung (8) zum Zuführen der Separatorfolie (1) von einer Endlosrolle, mit einem Stapeltisch (11) zur Aufnahme des Elektrodenstapels und mindestens einem Greifer (6,7) zum Aufnehmen und Ablegen der Elektroden (2,3), **dadurch gekennzeichnet, dass** am Greifer (6,7) ein Überdruckmodul (9) zur Erzeugung eines gerichteten Gasstroms (10) derart angeordnet ist, dass der aus dem Überdruckmodul (9) austretende Gasstrom (10) durch Umlenkung der Separatorfolie (1) eine Folientasche (17) formt, und dass jeweils seitlich am Stapeltisch (11) Niederhalter (4,5) angeordnet sind, wobei ein Niederhalter (4,5) dazu dient, die gebildete Folientasche (17) zu fixieren.

2. Vorrichtung zur Herstellung von Elektrodenstapeln nach Anspruch 1, **dadurch gekennzeichnet, dass** die Niederhalter (4,5) eine mindestens gleiche Breite wie die Separatorfolie (1) aufweisen.

3. Vorrichtung zur Herstellung von Elektrodenstapeln nach einem der Ansprüche 1 und 2, **dadurch gekennzeichnet, dass** der Greifer (6,7) schmaler als die aufzunehmenden und abzulegenden Elektroden (2,3) ausgeführt ist und ein Überhang (18) der Elektroden (2,3) entsteht.

4. Vorrichtung zur Herstellung von Elektrodenstapeln nach einem der vorhergehenden Ansprüche, **dadurch gekennzeichnet, dass** die Führungseinrichtung (8) alternierend verfahrbar ist.

5. Vorrichtung zur Herstellung von Elektrodenstapeln nach einem der vorhergehenden Ansprüche, **dadurch gekennzeichnet, dass** der Gasstrom (10) ein Luftstrom, vorzugsweise gereinigt und ionisiert, ist.

6. Vorrichtung zur Herstellung von Elektrodenstapeln nach einem der vorhergehenden Ansprüche, **dadurch gekennzeichnet, dass** der Greifer (6,7) parallel zum Stapeltisch (11) angeordnet ist.

7. Vorrichtung zur Herstellung von Elektrodenstapeln nach einem der vorhergehenden Ansprüche, **dadurch gekennzeichnet, dass** der Greifer (6,7) geneigt angeordnet ist, wobei sich der tiefste Punkt der Neigung in Richtung der sich bildenden Folientasche (17) der Separatorfolie (1) befindet.

8. Vorrichtung zur Herstellung von Elektrodenstapeln nach einem der vorhergehenden Ansprüche, **dadurch gekennzeichnet, dass** die Niederhalter (4,5) in x-z-Ebenen zum Stapeltisch (11) bewegbar sind.

9. Vorrichtung zur Herstellung von Elektrodenstapeln nach einem der vorhergehenden Ansprüche, **dadurch gekennzeichnet, dass** die Separatorfolie (1) mittels der Führungseinrichtung (8) an einem Fixpunkt (13) fixierbar ist.

10. Vorrichtung zur Herstellung von Elektrodenstapeln nach einem der vorhergehenden Ansprüche, **dadurch gekennzeichnet, dass** unterhalb des Niederhalters (4,5) ein Unterdruckmodul (15) zur weiteren Ausformung der Folientasche (17) angeordnet ist.

11. Vorrichtung zur Herstellung von Elektrodenstapeln nach einem der vorhergehenden Ansprüche, **dadurch gekennzeichnet, dass** die Niederhalter (4,5) an der der Separatorfolie (1) zugewandten Innenseite mit Umlenkrollen (19) zur Unterstützung der Faltung der Separatorfolie (1) versehen sind.

12. Vorrichtung zur Herstellung von Elektrodenstapeln nach einem der vorhergehenden Ansprüche, **dadurch gekennzeichnet, dass** an den Niederhaltern (4,5) an der der Separatorfolie (1) zugewandten Innenseite je eine Ausstromdüse (20) für einen Gasstrom (21) vorgesehen ist, wobei der Gasstrom (21) durch sein Wirken die Faltung der Separatorfolie (1) unterstützt.

13. Verfahren zur Herstellung von Elektrodenstapeln mit positiven und negativen Elektroden (2,3) und dazwischen liegender, mittels Zickzack-Faltung anzuordnender Separatorfolie (1), bei dem:
i) mit mindestens einer Führungseinrichtung (8) Separatorfolie (1) von einer Endlosrolle zugeführt wird,
ii) mit mindestens einem Greifer (6,7) Elektroden (2,3) aufgenommen und abgelegt werden,
iii) mittels eines am Greifer (6,7) angeordneten Überdruckmoduls (9) ein gerichteter Gasstrom (10) derart erzeugt wird, dass der aus dem Überdruckmodul (9) austretende Gasstrom (10) durch Umlenkung der Separatorfolie (1) eine Folientasche (17) formt, und
iv) mittels eines Niederhalters (4,5), der seitlich an einem zur Aufnahme des Elektrodenstapels vorgesehenen Stapeltisch (11) angeordnet ist, die gebildete Folientasche (17) fixiert wird.

14. Verfahren zur Herstellung von Elektrodenstapeln nach Anspruch 13, bei dem die Führungseinrichtung (8) alternierend verfahren wird.

15. Verfahren zur Herstellung von Elektrodenstapeln nach einem der Ansprüche 13 und 14, bei dem die Faltung der Separatorfolie (1) unterstützt wird
i) mittels Umlenkrollen, mit denen die Niederhalter (4,5) an der der Separatorfolie (1) zugewandten Innenseite (19) versehen sind, und/ oder
ii) mittels der Wirkung eines Gasstroms (21) aus jeweils einer Ausstromdüse (20), die an den Niederhaltern (4,5) jeweils an der der Separatorfolie (1) zugewandten Innenseite vorgesehen ist.

## Claims

1. A device for producing electrode stacks with positive and negative electrodes (2, 3) and a separator film (1) therebetween to be arranged by means of zigzag folding, with at least one guide apparatus (8) for supplying the separator film (1) from a continuous roll, with a stack table (11) for accommodating the electrode stack, and at least one gripper (6, 7) for picking up and laying down the electrodes (2, 3), **characterized in that** an overpressure module (9) is arranged on the gripper (6, 7) for generating a directed gas stream (10) such that the gas stream (10) leaving the overpressure module (9) forms a film pocket (17) by deflecting the separator film (1), and a hold-down device (4, 5) is arranged on the side of the stack table (11), wherein a hold-down device (4, 5) serves to fix the formed film pocket (17).

2. The device for producing electrode stacks according to claim 1, **characterized in that** the hold-down device (4, 5) has at least the same width as the separator film (1).

3. The device for producing electrode stacks according to one of claims 1 and 2, **characterized in that** the gripper (6, 7) is narrower than the electrodes (2, 3) to be picked up and laid down, and that an overhang (18) of the electrodes (2, 3) arises.

4. The device for producing electrode stacks according to one of the preceding claims, **characterized in that** the guide apparatus (8) is alternatingly movable.

5. The device for producing electrode stacks according to one of the preceding claims, **characterized in that** the gas stream (10) is an air stream, preferably purified and ionized.

6. The device for producing electrode stacks according to one of the preceding claims, **characterized in that** the gripper (6, 7) is arranged parallel to the stack table (11).

7. The device for producing electrode stacks according to one of the preceding claims, **characterized in that** the gripper (6, 7) is arranged inclined, wherein the deepest point of the inclination is located in the direction of the forming film pocket (17) of the separator film (1).

8. The device for producing electrode stacks according to one of the preceding claims, **characterized in that** the hold-down devices (4, 5) can be moved in x-z planes relative to the stack table (11).

9. The device for producing electrode stacks according to one of the preceding claims, **characterized in that** the separator film (1) can be fixed at a fixing point (13) by means of the guide apparatus (8).

10. The device for producing electrode stacks according to one of the preceding claims, **characterized in that** an underpressure module (15) is arranged below the hold-down device (4, 5) to further shape the film pocket (17).

11. The device for producing electrode stacks according to one of the preceding claims, **characterized in that** the hold-down devices (4, 5) are provided with deflection rollers (19) on the inside facing the separator film (1) for assisting with the folding of the separator film (1).

12. The device for producing electrode stacks according to one of the preceding claims, **characterized in that** on the inside of the hold-down devices (4, 5) facing the separator film (1), a discharge nozzle (20) is provided for a gas stream (21), wherein the gas stream (21) assists with the folding of the separator film (1) by its action.

13. A method for producing electrode stacks with positive and negative electrodes (2, 3) and a separator film (1) therebtween to be arranged by means of zigzag folding, wherein:
i) separator film (1) is supplied from a continuous roll by at least one guide apparatus (8),
ii) electrodes (2, 3) are picked up and laid down with at least one gripper (6, 7),
iii) by means of an overpressure module (9) arranged on the gripper (6, 7), a directed gas stream (10) is generated such that the gas stream (10) leaving the overpressure module (9) forms a film pocket (17) by deflecting the separator film (1), and
iv) the formed film pocket (17) is fixed by means of a hold-down device (4, 5) arranged on the side of the stack table (11) for accommodating the electrode stack,

14. The method for producing electrode stacks according to claim 13, wherein the guide apparatus (8) is moved alternatingly.

15. The method for producing electrode stacks according to one of claims 13 and 14, wherein the folding of the separator film (1) is supported:
i) by deflection rollers with which the hold-down devices (4, 5) are provided on the inside (19) facing the separator film (1), and/or
ii) by the action of a gas stream (21) from a discharge nozzle (20) that is provided on the retainers (4, 5) on the inside facing the separator film (1).

## Revendications

1. Dispositif de préparation de piles d'électrodes, avec des électrodes positives et négatives (2, 3) et une feuille séparatrice (1) entre ces dernières à disposer par pliage en zigzag, avec au moins un dispositif de guidage (8) pour l'alimentation de la feuille séparatrice (1) depuis un rouleau continu, avec une table d'empilage (11) pour l'accueil de la pile d'électrodes et au moins un grappin (6, 7) pour prendre et déposer les électrodes (2, 3), **caractérisé en ce qu'**est disposé sur le grappin (6, 7) un module de surpression (9) pour la génération d'un courant de gaz orienté (10) de manière à ce que le courant de gaz (10) sortant du module de surpression (9) forme une pochette (17) par déviation de la feuille séparatrice (1), et **en ce que** sont disposés chaque fois latéralement sur la table d'empilage (11) des abaisseurs (4, 5), un abaisseur (4, 5) servant à fixer la pochette (17) formée.

2. Dispositif de préparation de piles d'électrodes selon la revendication 1, **caractérisé en ce que** les abaisseurs (4, 5) ont une largeur au moins égale à celle de la feuille séparatrice (1).

3. Dispositif de préparation de piles d'électrodes selon l'une quelconque des revendications 1 et 2, **caractérisé en ce que** le grappin (6, 7) est formé moins large que les électrodes (2, 3) à prendre et à déposer et les électrodes (2, 3) sont en porte-à-faux (18).

4. Dispositif de préparation de piles d'électrodes selon l'une quelconque des revendications précédentes, **caractérisé en ce que** le dispositif de guidage (8) peut être déplacé de manière alternante.

5. Dispositif de préparation de piles d'électrodes selon l'une quelconque des revendications précédentes, **caractérisé en ce que** le courant de gaz (10) est un courant d'air, de préférence purifié et ionisé.

6. Dispositif de préparation de pile d'électrodes selon l'une quelconque des revendications précédentes, **caractérisé en ce que** le grappin (6, 7) est disposé parallèlement à la table d'empilage (11).

7. Dispositif de préparation de piles d'électrodes selon l'une quelconque des revendications précédentes, **caractérisé en ce que** le grappin (6, 7) est disposé incliné, dans lequel le point le plus profond de l'inclinaison es situé en direction de la pochette (17) en formation de la feuille séparatrice (1).

8. Dispositif de préparation de piles d'électrodes selon l'une quelconque des revendications précédentes, **caractérisé en ce que** les abaisseurs (4, 5) sont mobiles dans des plans x-z par rapport à la table d'empilage (11).

9. Dispositif de préparation de piles d'électrodes selon l'une quelconque des revendications précédentes, **caractérisé en ce que** la feuille séparatrice (1) peut être fixée au moyen du dispositif de guidage (8) à un point fixe (13).

10. Dispositif de préparation de piles d'électrodes selon l'une quelconque des revendications précédentes, **caractérisé en ce qu'**est disposé au-dessous de l'abaisseur (4, 5) un module de dépression (15) pour continuer le formage de la pochette (17).

11. Dispositif de préparation de piles d'électrodes selon l'une quelconque des revendications précédentes, **caractérisé en ce que** les abaisseurs (4, 5) sont dotés sur le côté intérieur faisant face à la feuille séparatrice (1) de poulies de renvoi (19) destinées à assister le pliage de la feuille séparatrice (1).

12. Dispositif de préparation de piles d'électrodes selon l'une quelconque des revendications précédentes, **caractérisé en ce qu'**est prévu sur chaque abaisseur (4, 5), sur le côté intérieur faisant face à la feuille séparatrice (1), une buse d'écoulement (20) pour un courant de gaz (21), le courant de gaz (21) assistant de par son effet le pliage de la feuille séparatrice (1).

13. Procédé de préparation de piles d'électrodes avec des électrodes positives et négatives (2,3) et une feuille séparatrice (1) entre ces dernières à disposer par pliage en zigzag, dans lequel :
i) la feuille séparatrice (1) est alimentée avec au moins un dispositif de guidage (8) depuis un rouleau continu,
ii) des électrodes (2, 3) sont prises et déposées avec au moins un grappin (6, 7),
iii) un courant de gaz orienté (10) est généré au moyen d'un module de surpression (9) disposé sur le grappin (6, 7) de manière à ce que le courant de gaz (10) sortant du module de surpression (9) forme une pochette (17) par déviation de la feuille séparatrice (1), et
iv) la pochette (17) formée est fixée au moyen d'un abaisseur (4, 5) disposé latéralement sur une table d'empilage (11) prévue pour l'accueil de la pile d'électrodes.

14. Procédé de préparation de piles d'électrodes selon la revendication 13, dans lequel le dispositif de guidage (8) peut être déplacé de manière alternante.

15. Procédé de préparation de piles d'électrodes selon l'une quelconque des revendications 13 et 14, dans lequel le pliage de la feuille séparatrice (1) est assisté
i) au moyen de poulies de renvoi desquelles les abaisseurs (4, 5) sont dotés sur le côté intérieur (19) faisant face à la feuille séparatrice (1), et/ou
ii) au moyen de l'effet d'un courant de gaz (21) venant respectivement d'une buse d'écoulement (20) prévue sur les abaisseurs (4, 5) chaque fois sur le côté intérieur faisant face à la feuille séparatrice (1).
